# EUROPEAN PATENT APPLICATION

(11) **EP 1 432 267 A2**
(43) Date of publication of application: **23.06.2004**
(21) Application number: 03029451.6
(22) Date of filing: 19.12.2003
(51) Int. Cl.: H04Q 7/38

(54) **Soft handover control apparatus and system**

(30) Priority: 20.12.2002 JP 2002369374
(71) Applicant: NEC CORPORATION, Tokyo (JP)
(72) Inventor: Ohwada, Hideki, Minato-ku Tokyo (JP)
(74) Representative: Glawe, Delfs, Moll & Partner

(57) **Abstract**

A communication control apparatus of a CDMA base station system, include a control section (10) and a transmission signal processing section (9). The control section generates a first transmission start signal (ST1) to instruct start of software hand-over for a mobile station which is communicating. The transmission signal processing section determines a current time period (TM) from at least one previous time period in response to the first transmission start signal, and generates a second transmission start signal (ST2) after the determined current time period from reception of the first transmission start signal. The previous time period is measured in the transmission signal processing section. A transmission signal is transmitted from the communication control apparatus to the communicating mobile station in response to the second transmission start signal.

## Description

### Background of the Invention

### 1. Field of the Invention

The present invention relates to a communication control apparatus which determine a transmission start timing without support of another apparatus in software hand-over and a CDMA base station system using the same.

### 2. Description of the Related Art

In a code division multiple access (CDMA) radio communication system, a cellular system is known in which a service area is divided into a plurality of cells and a base station is arranged in the center of each cell. In the cellular system, a cell is divided into areas called as sectors, and an antenna is arranged for each sector. A mobile station establishes radio links with the base station through the antennas of a plurality of sectors at a same time, and carries out software hand-over. Thus, the improvement of the reception quality and the no disconnection communication are realized.

When the mobile tries to establish the radio links with the base station through an antenna of a specific sector and another antenna of another sector different from the specific sector, the base station starts a transmission earlier the mobile station because of a time difference for transmission setup. The base station increases transmission power gradually through transmission power control, if an upstream radio link from the mobile station is not established. Therefore, a radio signal transmitted from the base station acts as an interference component for another mobile station to degrade the communication quality, until the synchronization with a reception signal from the mobile station is established after the base station starts the transmission. To decrease this interference component, the base station needs to delay the transmission start timing for a predetermined time in case of software hand-over.

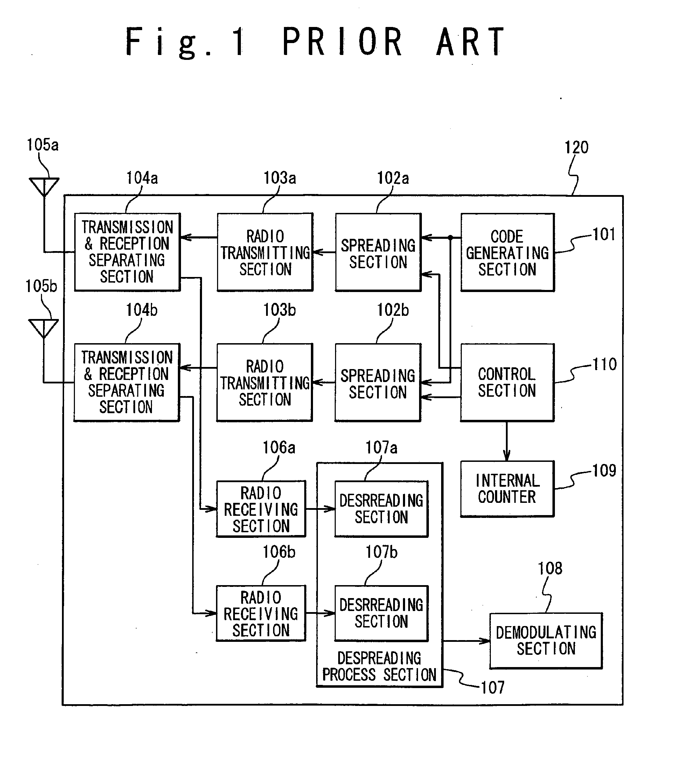

Fig. 1 is a block diagram showing the circuit structure of a conventional CDMA base station apparatus. When upstream and downstream radio links through an antenna 105a are established and software hand-over is carried out using an antenna 105b, a control section 110 is necessary to control the transmission start timing. The control section 110 refers to an internal counter 109 in a software polling process, and calculates the transmission start timing based on a value read out from the internal counter 109 and a transmission start timing value supplied externally. Then, the control section 110 outputs a transmission start signal to a spreading section 102b to start transmission. At this time, because the control section 110 needs to receive the transmission start timing value from a host apparatus as an external apparatus, the control section 110 must have an interface between software.

There are the following problems in the conventional CDMA base station apparatus shown in Fig. 1.

First, the CDMA base station apparatus does not measure a transmission start timing and a synchronization establishment time of the reception signal on the radio link through the antenna 105a. For this reason, it is necessary to notify the transmission start timing value from the host apparatus for the calculation of the transmission start timing before start of the software hand-over.

Second, in the CDMA base station apparatus, the internal counter 109 is referred to in the software polling process. Also, the counter value of the transmission start timing is calculated in software, and a transmission start control is carried out in software. Thus, the software process increases.

A technique is demanded in which it is possible to determine the transmission start timing without any support of another apparatus for the software hand-over and to determine the transmission start timing without depending on the transmission start timing value from the other apparatus in the CDMA base station apparatus. Also, a technique is demanded in which the load of the software process is light in case of software hand-over start. Also, a technique is demanded in which it is not necessary to carry out controls such as the transfer of the transmission start timing value in software, the calculation of the transmission start timing, the monitor of a timer, and the transmission start control in case of software hand-over start.

In conjunction with the above description, a technique is disclosed in Japanese Laid Open Patent Application (JP-P2001-517892A), in which the establishment of synchronization is supported in the CDMA communications system. In this conventional example, a first base station is synchronized with a reference base station. For this purpose, the following steps (a) to (d) are carried out. That is, in the step (a), a round transmission delay time is measured in the transmission from the reference base station to a mobile station and the reply from the mobile station to the reference base station. In the step (b), a first time difference is measured in the mobile station between a reception time of a forward link signal from the first base station and a reception time of a forward link signal from the reference base station. In the step (c), a second time difference is measured in the first base station between a reception time of an opposite direction link signal from the mobile station and a transmission time of a forward link signal from the first base station. In the step (d), a timing correction value is calculated based on the measured round transmission delay time, the first time difference and the second time difference. The timing correction value is used for the adjustment of the timing of the first base station.

### Summary of the Invention

Therefore, an object of the present invention is to provide a communication control apparatus, and a CDMA base station system using the same, in which it is possible to determine a transmission start timing without any support of another apparatus in start of software hand-over.

Also, another object of the present invention is to provide a communication control apparatus, and a CDMA base station system using the same, in which it is possible to determine a transmission start timing without a transmission start timing value from another apparatus in star of software hand-over.

Also, another object of the present invention is to provide a communication control apparatus, and a CDMA base station system using the same, in which the load of a software process is light in start of software hand-over.

Also, another object of the present invention is to provide a communication control apparatus, and a CDMA base station system using the same, in which it is not necessary to carry out software controls such as transfer of a transmission start timing value, calculation of a transmission timing, monitor of a timer, and transmission start control in start of software hand-over.

Also, another object of the present invention is to provide a communication control apparatus, and a CDMA base station system using the same, in which it is determine a transmission start timing in hardware configuration built therein in start of software hand-over.

In an aspect of the present invention, a communication control apparatus of a CDMA base station system, include a control section and a transmission signal processing section. The control section generates a first transmission start signal to instruct start of software hand-over for a mobile station which is communicating. The transmission signal processing section determines a current time period from at least one previous time period in response to the first transmission start signal, and generates a second transmission start signal after the determined current time period from reception of the first transmission start signal. The previous time period is measured in the transmission signal processing section. A transmission signal is transmitted from the communication control apparatus to the communicating mobile station in response to the second transmission start signal.

Here, the transmission signal processing section may further include a memory area. The transmission signal processing section determines the current time period from the at least one previous time period stored in the memory area. In this case, the transmission signal processing section may receive a reply signal to the transmission signal as a synchronization establishment signal from the communicating mobile station, determines a time period from the generation of the second transmission start signal to the reception of the synchronization establishment signal and stores the determined time period as the previous time period in the memory area.

Also, the memory area is desirably provided for every mobile station. Also, the memory area may be cleared if the memory area is not accessed for a predetermined time. In this case, the memory area may be allocated to another mobile station after the memory area is cleared.

Also, the communication control apparatus may be provided for a plurality of sectors. The software hand-over is carried out between first and second sectors of the plurality of sectors, and the communicating mobile phone is communicating in the first sector.

Also, there may be a plurality of previous time periods. The transmission signal processing section determines the current time period from an addition of all of the plurality of previous time periods.

Also, the transmission signal processing section determines the current time period from the previous time period immediately before.

Also, the transmission signal processing section may include a memory area which is provided for the mobile station to store the at least one previous time period. A transmission control signal generating section reads out the at least one previous time period from the memory area to determine the current time period. A timing generating section contains a first counter and outputs the second transmission start signal when a counter value of the first counter and the current time period are coincident with each other. The transmission control signal generating section receives the second transmission start signal from the timing generating section and outputs the second transmission start signal.

Also, the transmission signal processing section may include a memory area which is provided for the mobile station to store the at least one previous time period. A transmission control signal generating section reads out the at least one previous time period from the memory area in response to the first transmission start signal to determine the current time period. A timing generating section contains a first counter and outputs the second transmission start signal when a counter value of the first counter and the current time period are coincident with each other. A transmission timing counter contains a second counter and latches a second counter value of the second counter in response to the second transmission start signal. A synchronization timing counter contains a third counter and latches a third counter value of the third counter in response to a reply signal to the transmission signal as a synchronization establishment signal from the mobile station. A timing measuring section reads the second counter value from the transmission timing counter and reads the third counter value from the synchronization timing counter in response to the synchronization establishment signal, and calculates a difference between the second counter value and the third counter value as a time period. The transmission control signal generating section receives and transfer the second transmission start signal from the timing generating section and stores the calculated time period as the previous time period in the memory area.

Also, the transmission signal processing section may include a memory area which is provided for the mobile station to store the at least one previous time period. A transmission control signal generating section reads out the at least one previous time period from the memory area in response to the first transmission start signal to determine the current time period. A timing generating section contains a first counter, and outputs the second transmission start signal and the count value of the first counter as a first transmission counter value to a timing measuring section, when a counter value of the first counter and the current time period are coincident with each other, and outputs the count value of the first counter as a synchronization first counter value to the timing measuring section in response to a reply signal to the transmission signal as a synchronization establishment signal from the mobile station. The timing measuring section calculates a time period as a difference between the first transmission counter value and the synchronization first counter value in response to the synchronization establishment signal. The transmission control signal generating section receives and transfers the second transmission start signal from the timing generating section, and stores the calculated time period as the previous time period in the memory area.

Also, the transmission signal processing section may further include a timing comparing section which outputs the calculated time period to the transmission control signal generating section when the calculated time period outputted from the timing measuring section is equal to or less than a reference value set previously.

In another aspect of the present invention, a CDMA base station system includes the communication control apparatus described above, and antennas which are connected with the communication control apparatus to communicate with the communicating mobile station. The communication control apparatus may further include spreading sections, a selected one of which generates a spread signal obtained by carrying out a spreading process to a transmission base band signal in response to the second transmission start signal, the spread signal being transmitted to the communicating mobile state through one of the antennas corresponding to the selected spreading section; and despreading sections, one of which corresponds to the selected spreading section and carries out synchronization detection of a reception signal from the communicating mobile station and outputs the synchronization establishment signal.

In another aspect of the present invention, a communication control method in a CDMA base station system, is achieved by generating a first transmission start signal to instruct software hand-over between a first sector and a second sector different from the first sector in which a mobile station which is communicating; by generating a second transmission start signal with a current time period in response to the first transmission start signal; and by transmitting to the communicating mobile station, a spread signal which is obtained by carrying out a spreading process to a transmission base band signal in response to the second transmission start signal.

Here, the generating of a second transmission start signal may be achieved by reading out at least one transmission time value corresponding to the communicating mobile station from a memory area in response to the first transmission start signal; by determining the current time period from the read out at least one transmission time value; and by generating the second transmission start signal when a counter value of a first counter and the determined current time period are coincident with each other.

In this case, the communication control method may further include generating a synchronization establishment signal from a reception signal received from the communicating mobile station; and determining the transmission time value based on the synchronization establishment signal and the first transmission start signal; and storing the determined transmission time value in the memory area.

The determining of the transmission time value may be achieved by holding a second counter value of a second counter in response to the second transmission start signal; by holding a third counter value of a third counter in response to the synchronization establishment signal; and by calculating the transmission time value from the second counter value and the third counter value.

Also, the storing of the determined transmission time value may be achieved by determining whether the determined transmission time value is larger than a reference value; and by storing the determined transmission time value in the memory area when the determined transmission time value is equal to or less than the reference value.

### Brief Description of the Drawings

Fig. 1 is a block diagram showing the circuit structure of a conventional CDMA base station apparatus;
Fig. 2 is a diagram showing the circuit structure of the communication control apparatus of the CDMA base station system according to a first embodiment of the present invention;
Fig. 3 is a diagram showing the circuit structure of a transmission signal processing section applied to the communication control apparatus of the CDMA base station system according to the first embodiment of the present invention;
Figs. 4A to 4H are timing charts showing time changes of signals and counter values in the communication control apparatus in the first embodiment;
Figs. 5A and 5B are a flow chart showing an operation of the communication control apparatus of the CDMA base station system according to the first embodiment of the present invention;
Figs. 6A to 6H are timing charts showing time changes of signals and counter values in the communication control apparatus in the first embodiment;
Fig. 7 is a diagram showing the circuit structure of the transmission signal processing section applied to the communication control apparatus of the CDMA base station system according to a second embodiment of the present invention.

### Description of the Preferred Embodiments

Hereinafter, a communication control apparatus of a CDMA base station system of the present invention will be described with reference to the attached drawings.

First, the communication control apparatus of the CDMA base station system according to the first embodiment of the present invention will be described.

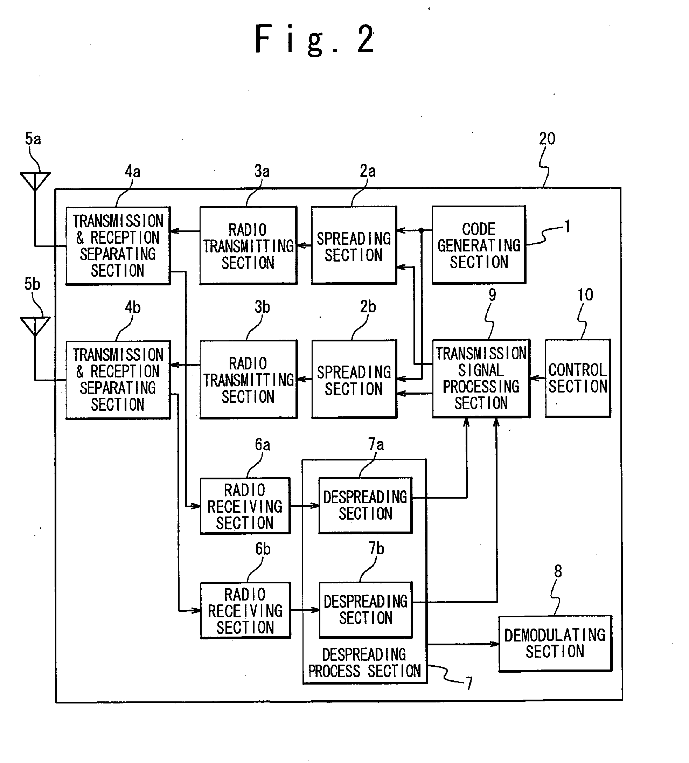

Fig. 2 is a diagram showing the circuit structure of the communication control apparatus of the CDMA base station system according to the first embodiment of the present invention. Referring to Fig. 2, the communication control apparatus is composed of a code generating section 1, spreading sections 2a and 2b, radio transmitting sections 3a and 3b, transmission and reception separating section 4a and 4b, antennas 5a and 5b, radio receiving section 6a and 6b, a despreading process section 7 containing despreading sections 7a and 7b, a demodulating section 8, a transmission signal processing section 9 and a control section 10. Here, the communication control apparatus in case of two sectors is shown as an example. However, the present invention is not limited to this example. Subscripts a and b in Fig. 2 correspond to the respective two sectors, respectively.

The code generating section 1 generates and outputs spreading codes base band signal to the spreading sections 2a and 2b, respectively. The transmission signal processing section 9 receives transmission signals and processes them to generate transmission base band signals and to output to the spreading sections 2a and 2b, respectively.

Each of the spreading sections 2a and 2b carries out a spreading process to the corresponding transmission base band signal by using the corresponding spreading code for the corresponding sector and user by the spectrum spreading technique of a code division multiple access (CDMA) system (the sector and the user are notified from a host apparatus). Thus, the spreading sections 2a and 2b generate spread signals a and b, respectively and output those spread signals to the radio transmitting sections 3a and 3b, respectively. In this case, the spreading process is started based on the timing of a transmission start signal ST2 supplied from the transmission signal processing section 9.

The radio transmitting sections 3a and 3b carry out operations such as an orthogonal modulation, a radio frequency conversion, a transmission power control and a D/A conversion to the supplied spreads signals and output to the transmission and reception separating section 4a and 4b, respectively. The transmission and reception separating sections 4a and 4b output the transmission radio signals supplied from the radio transmitting section 3a and 3b to mobile stations through the antennas 5a and 5b.

Also, the transmission and reception separating section 4a and 4b receives radio transmission signals from the mobile stations through the antennas 5a and 5b and output the reception signals to the radio receiving section 6a and 6b, respectively. The radio receiving sections 6a and 6b carry out operations such as a frequency conversion, a level correction and an A/D conversion to the reception signals, and then output to despreading process section 7.

The despreading process section 7 contains the despreading section 7a and 7b corresponding to the respective sectors. Each of the despreading sections 7a and 7b carries out a despreading process of a common pilot channel used for phase estimation of each sector, a despreading process of reception user data of the reception signal from the mobile station and the synchronization detection using a pilot symbol in the reception user data. The despreading sections 7a and 7b transmit the despread reception user data to the demodulating section 8. Also, when synchronization has been established through the synchronization detection of the pilot symbol, the despreading sections 7a and 7b generate and transmit synchronization establishment signals SD to the transmission signal processing section 9. The demodulation section 8 carries out a demodulating process of the reception user data after the dispreading process. The demodulated reception user data is subjected to a predetermined process and then transmitted to a CDMA base station which controls a mobile station of a user on the counter side.

The control section 10 generates a transmission start signal ST1 corresponding to each of the sectors every user notified from the host apparatus, and outputs to the transmission signal processing section 9. The transmission signal processing section 9 generates the transmission start signal ST2 based on the transmission start signal ST1 as a transmission control signal supplied from the control section 10 and the synchronization establishment signal SD supplied from the despreading process section 7. Then, the transmission signal processing section 9 outputs the transmission start signal ST2 to the spreading sections 2a and 2b to control the transmission.

Next, the transmission signal processing section 9 in the first embodiment will be described.

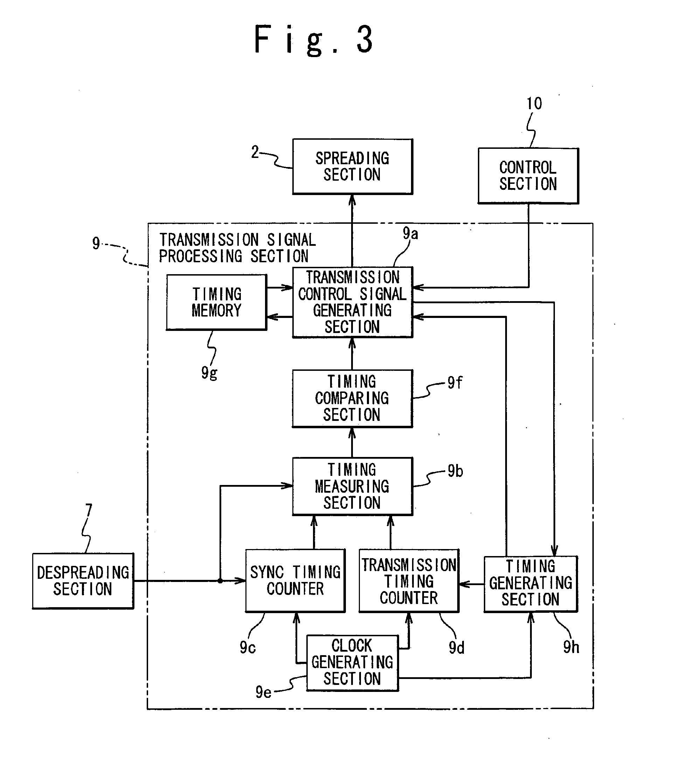

Fig. 3 is a diagram showing the circuit structure of the transmission signal processing section 9 for in the communication control apparatus of the CDMA base station system according to the first embodiment of the present invention. Referring to Fig. 3, the transmission signal processing section 9 is composed of a transmission control signal generating section 9a, a timing measuring section 9b, a sync timing counter 9c, a transmission timing counter 9d, a clock generating section 9e, a timing comparing section 9f, a timing memory 9g, and a timing generating section 9h. These are configured of electronic circuits in hardware.

The clock generating section 9e generates a clock signal and supplies to the sync timing counter 9c, the transmission timing counter 9d and the timing generating section 9h. The transmission timing counter 9d counts the clock signal supplied from the clock generating section 9e and latches a counter value in response to the transmission start signal ST2 supplied from the timing generating section 9h. The counter value in this case is referred to as a transmission timing counter value C1. The sync timing counter 9c counts the clock signal supplied from the clock generating section 9e and latches a counter value in response to the synchronization establishment signal SD supplied from the despreading section 7a of the despreading process section 7. The counter value in this case is referred to as a synchronization timing counter value C2.

The timing measuring section 9b reads the transmission timing counter value C1 from the transmission timing counter 9d and the synchronization timing counter value C2 from the sync timing counter 9c in response to the synchronization establishment signal SD supplied from the despreading process section 7 (7a or 7b). Then, the timing measuring section 9b calculates a transmission timing value Δ as a difference Δ between the transmission timing counter value C1 and the synchronization timing counter value C2 and outputs the transmission timing value Δ to the timing comparing section 9f. The transmission timing value Δ indicates a time period from the generation of the transmission start signal ST2 to the generation of the synchronization establishment signal SD. At the same time, the timing measuring section 9b controls the transmission timing counter 9d and the sync timing counter 9c to restart.

The timing comparing section 9f holds a permissive range of the transmission timing value Δ set previously as a threshold P. The timing comparing section 9f outputs the transmission timing value Δ to the transmission control signal generating section 9a, in case of transmission timing value Δ ≤ threshold P. The timing comparing section 9f does not output it to the transmission control signal generating section 9a in case of transmission timing value Δ > threshold P. The transmission control signal generating section 9a reads all the transmission timing values Δ concerned with the mobile station from the timing memory 9g in response to the transmission start signal ST1 supplied from the control section 10. Then, the transmission control signal generating section 9a adds all of them and generates a transmission start timing value TM and sets into the timing generating section 9h. Also, the transmission control signal generating section 9a receives the transmission start signal ST2 from the timing generating section 9h and outputs the transmission start signal ST2 to the spreading section 2 (2a or 2b). Moreover, the transmission control signal generating section 9a stores the transmission timing value Δ in the timing memory 9g every mobile station.

The timing memory 9g is a memory into and from which the transmission control signal generating section 9a can write and read the transmission timing value Δ every mobile station. The timing memory 9g may be replaced by a memory area provided for every mobile station.

The timing generating section 9h is composed of a counter circuit (not shown), and counts the clock signal supplied from the clock generating section 9e to the transmission start timing value TM set by the transmission control signal generating section 9a. Then, when the count value is coincident with the transmission start timing value TM, the timing generating section 9h transmits the transmission start signal ST2 to the transmission timing counter 9d. At the same time, the timing generating section 9h transmits the transmission start signal ST2 to the transmission control signal generating section 9a.

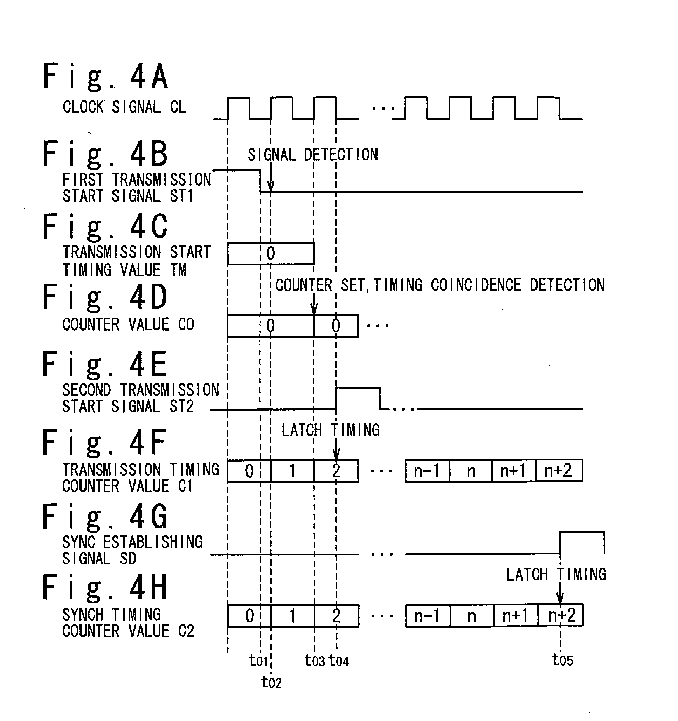

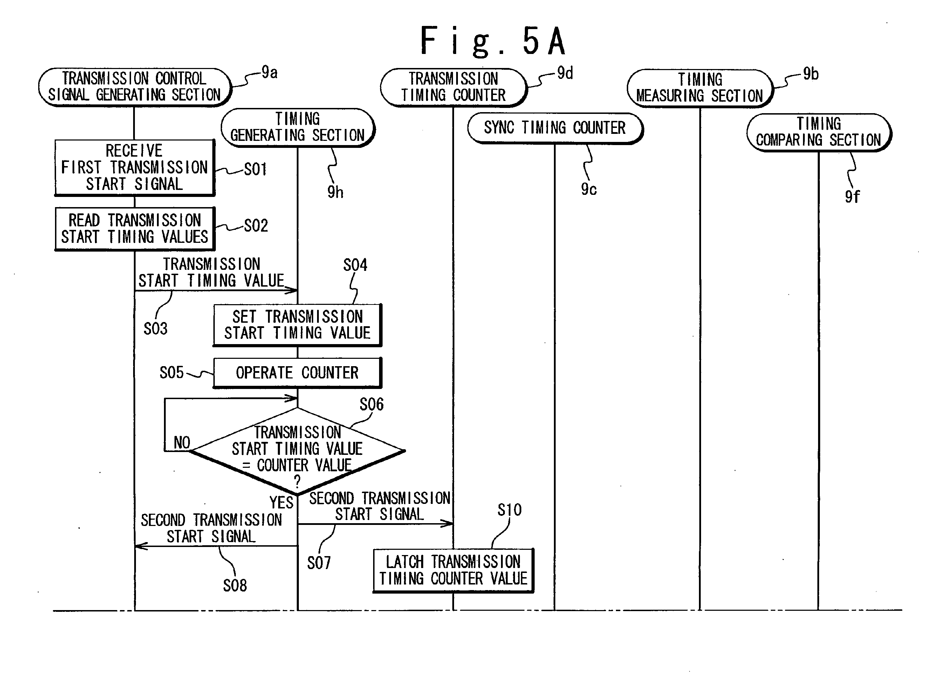

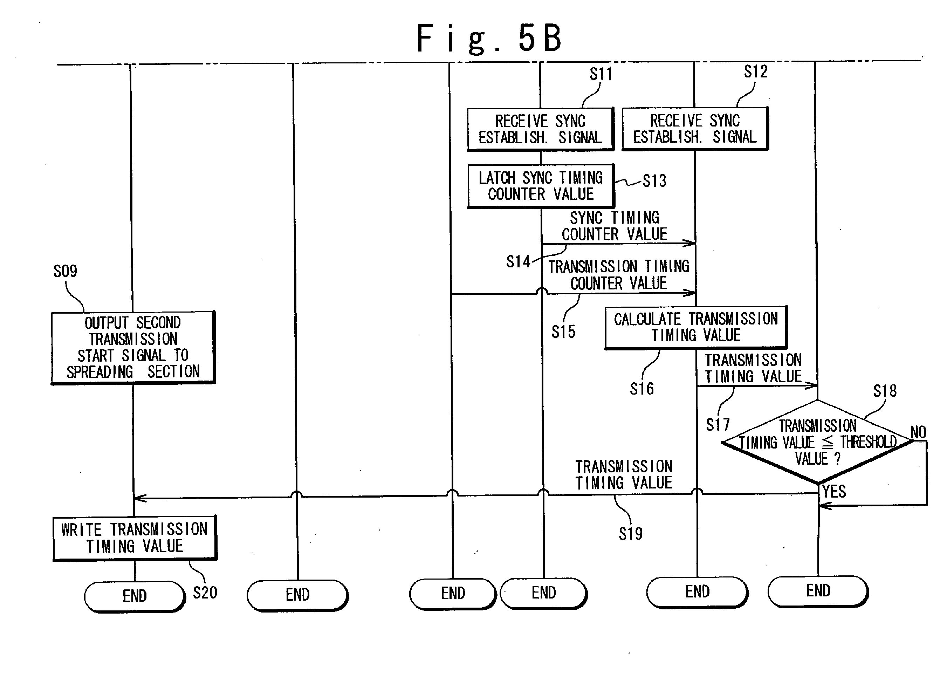

Next, an operation of the communication control apparatus of the CDMA base station system according to the first embodiment of the present invention will be described with reference to Figs. 4A to 4H and Figs. 5A and 5B.

A case where upstream and downstream radio links through the antenna 5b are established through software hand-over in the state that the mobile station has established upstream and downstream radio links with the communication control apparatus 20 through the antenna 5a will be described. Here, Fig. 4 shows time changes of signals and counter values in the communication control apparatus. Fig. 4A shows a clock signal CL generated by the clock generating section 9e, and Fig. 4B shows the transmission start signal ST1 outputted from the control section 10 to the transmission control signal generating section 9a. Fig. 4C shows the transmission start timing value TM set by the timing generating section 9h, and Fig. 4D shows the count value C0 counted by the timing generating section 9h. Fig. 4E shows the transmission start signal ST2 generated by the timing generating section 9h, and Fig. 4F shows the transmission timing counter value C1 counted by the transmission timing counter 9d. Fig. 4G shows the synchronization establishment signal SD generated by the despreading section 7, and Fig. 4H shows the synchronization timing counter value C2 counted by the sync timing counter 9c. Figs. 5A and 5B is a flow chart showing the operation of the communication control apparatus of the CDMA base station system according to the first embodiment of the present invention.

### (1) Step S01:

To start the transmission of the spreading section 2b through the antenna 5b, the control section 10 supplies the transmission start signal ST1 shown in Fig. 4B to the transmission signal processing section 9. The transmission control signal generating section 9a in the transmission signal processing section 9 receives the transmission start signal ST1 supplied from the control section 10 at time t01.

### (2) Step S02:

The transmission control signal generating section 9a reads all the transmission timing values Δ from the timing memory 9g for the mobile station in response to the first transmission start signal ST1, and adds all the transmission timing values Δ to calculate the transmission start timing value TM. Here, it is supposed that the first timing value of the transmission start timing value TM is 0 at time t02, as shown in Fig. 4C.

### (3) Step S03:

The transmission control signal generating section 9a outputs the first timing value (=0) of the transmission start timing value TM to the timing generating section 9h.

### (4) Step S04:

The timing generating section 9h sets the first timing value (=0) of the transmission start timing value Tm in the counter circuit at time t03, as shown in Fig. 4D.

### (5) Step S05:

The counter circuit starts to count the clock signal supplied from the clock generating section 9e from 0.

### (6) Step S06:

The timing generating section 9h determines whether the counter value C0 of the counter circuit and the first timing value of the transmission start timing value TM are coincident with each other.

### (7) Step S 07:

The timing generating section 9h outputs the transmission start signal ST2 to the transmission timing counter 9d, when the counter value C0 and the transmission start timing value TM are coincident with each other. In this example, because the first timing value C0 of the transmission start timing value TM is 0, the counter value and the transmission start timing value TM become equal simultaneously with the operation start of the counter. Then, the timing generating section 9h outputs the transmission start signal ST2 to the transmission timing counter 9d at time t04, as shown in Fig. 4E.

### (8) Step S08:

The timing generating section 9h outputs the transmission start signal ST2 to the transmission control signal generating section 9a, when the counter value and the transmission start timing value TM become equal to each other. This is carried out simultaneously with the step S07.

### (9) Step S09:

The transmission control signal generating section 9a transmits the transmission start signal ST2 to the spreading section 2b and starts the transmission of the spreading section 2b through the antenna 5b.

### (10) Step S10:

The transmission timing counter 9d latches the counter value C1 in response to the transmission start signal ST2 supplied from the timing generating section at time t04. At this time, as shown in Fig. 4F, the transmission timing counter value C1 is 2.

### (11) Step S11:

On the other hand, the despreading section 7b carries out the despreading process and the synchronization detection of the reception signal received through the antenna 5b, the transmission and reception separation section 4b, and the radio receiving section 6b. During this period, the sync timing counter 9c counts up the clock signal supplied from the clock generating section 9e because a transmission from the mobile station is not started. Then, the despreading section 7b generate the synchronization establishment signal SD in response to the synchronization establishment of the upstream radio link and supplies it to the sync timing counter 9c, as shown fig. 4G. The sync timing counter 9c receive the synchronization establishment signal SD.

### (12) Step S12:

The sync timing counter 9c latches the counter value as a synchronization timing counter value C2 in response to the synchronization establishment signal SD supplied from the despreading section 7b. The synchronization timing counter value C2 is n+2 at time t05, as shown in Fig. 4H.

### (13) Step S13:

The timing measuring section 9b receive the synchronization establishment signal SD like the sync timing counter 9c.

### (14) Step S14:

The timing measuring section 9b reads the synchronization timing counter value C2 (=n+2) from the sync timing counter 9c in response to the synchronization establishment signal.

### (15) Step S15:

The timing measuring section 9b reads the transmission timing counter value C1 (=2) from the transmission timing counter 9d in response to the synchronization establishment signal SD.

### (16) Step S16:

The timing measuring section 9b calculate a difference Δ (= (n+2)-2 = n) between both the counter values.

### (17) Step S17:

The timing measuring section 9b outputs the transmission timing value Δ (=n) as the difference Δ to the timing comparing section 9f. The timing comparing section 9f receives the transmission timing value Δ.

### (18) Step S18:

The timing comparing section 9f compares the threshold P set previously and the transmission timing value Δ.

### (19) Step S19:

The timing comparing section 9f outputs the transmission timing value Δ to the transmission control signal generating section 9a in case of transmission timing value Δ ≤ threshold P. The timing comparing section 9f does not output it to the transmission control signal generating section 9a in case of transmission timing value Δ > threshold P.

### (20) Step S20:

The transmission control signal generating section 9a writes the transmission timing value Δ (=n) into the timing memory 9g. The next transmission start timing value TM is equal to an addition of all the transmission timing values Δ written in the timing memory 9g. In this example, it is n. This transmission start timing value TM (=n) is used for the next timing adjustment to the software hand-over in the same mobile station.

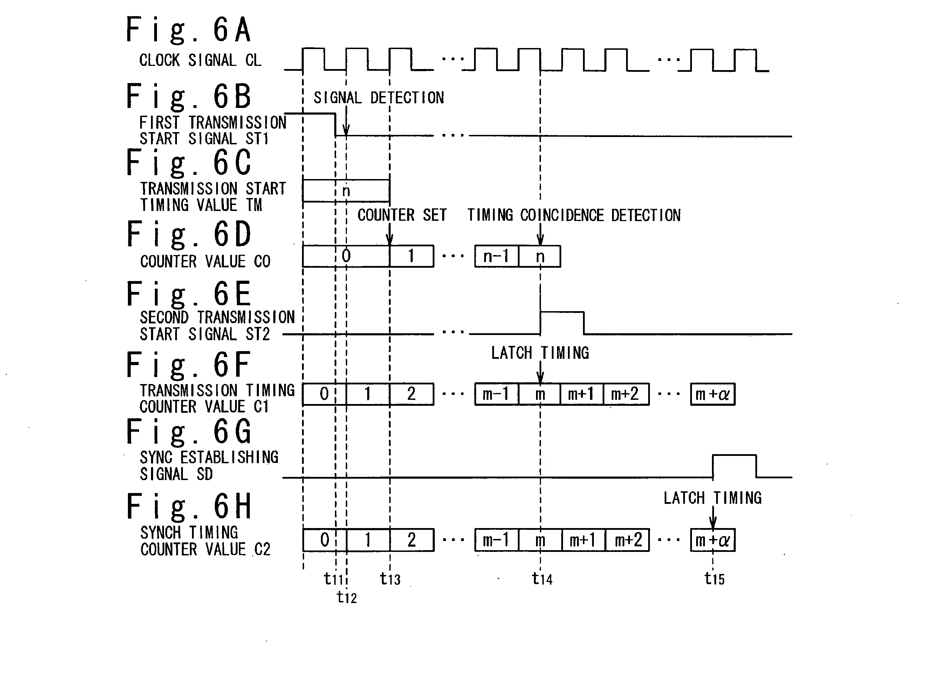

Next, a case where the same mobile station establishes the upstream and downstream radio links with the communication control apparatus 20 through the antenna 5b in the software hand-over in the state that the upstream and downstream radio links with the antenna 5a of the communication control apparatus 20 are established again (in the temporally continuous state during the same communication) will be described referring to Figs. 5a and 5B and Figs. 6A to 6H. Here, Figs. 6A to 6H are timing charts showing the time changes of signals and counter values in the communication control apparatus. Figs. 6A to 6H correspond to Figs. 4A to 4H.

### (1) Step S01:

To start the transmission of the spreading section 2b through the antenna 5b, the control section 10 supplies the transmission start signal ST1 to the transmission signal processing section 9. The transmission control signal generating section 9a in the transmission signal processing section 9 receives the transmission start signal ST1 from the control section 10 at time t11, as shown in Fig. 6B.

### (2) Step S02:

The transmission control signal generating section 9a reads all the transmission timing values Δ from the timing memory 9g for the same mobile station in response to the transmission start signal ST1 and adds them to calculate the transmission start timing value TM. As the first timing value, n is used which is written in the timing memory 9g the last time as described above, at time t12, as shown in Fig. 6C.

### (3) Step S03:

The transmission control signal generating section 9a outputs the transmission start timing value TM (=n) to the timing generating section 9h.

### (4) Step S04:

The timing generating section 9h sets the transmission start timing value TM (=0) in the counter circuit built therein at time t13, based on the transmission start timing value TM (=n), as shown in Fig. 6D.

### (5) Step S 05:

The counter circuit starts to count up the clock signal supplied from the clock generating section from 0 in the timing generating section 9h.

### (6) Step S06:

The timing generating section 9h determines whether the counter value of the counter circuit and the transmission start timing value TM (=n) are equal to each other.

### (7) Step S 07:

The timing generating section 9h outputs the transmission start signal ST2 to the transmission timing counter 9d, when the counter value and the transmission start timing value TM are equal to each other. In this case, because the transmission start timing value TM is n, the timing generating section 9h outputs the transmission start signal ST2 to the transmission timing counter 9d at the timing when the counter value is counted up to n, i.e., at time t14, as shown in Fig. 6D.

### (8) Step S08:

The timing generating section 9h outputs the transmission start signal ST2 to the transmission control signal generating section 9a, when the counter value and the transmission start timing value TM are equal to each other. This is carried out simultaneously with the step S07.

### (9) Step S09:

The transmission control signal generating section 9a transmits the transmission start signal ST2 to the spreading section 2b to start the transmission of the spreading section 2b through the antenna 5b.

### (10) Step S10:

The transmission timing counter 9d latches the transmission timing counter value C1 in response to the transmission start signal ST2 supplied from the timing generating section 9h. This is carried out at the transmission timing counter value C1 (=m) at time t14, as shown in Fig. 6F.

### (11) Step S11:

On the other hand, the despreading section 7b carries out the despreading process and the synchronization detection of the reception signal received through the antenna 5b, the transmission and reception separating section 4b and the radio receiving section 6b. Because transmission is not started from the mobile station until here, the sync timing counter 9c counts up the clock signal supplied from the clock generating section 9e. Then, the despreading section 7b generates the synchronization establishment signal SD through the synchronization establishment of the upstream radio link and supplies it to the sync timing counter 9c. The sync timing counter 9c receives the synchronization establishment signal SD.

### (12) Step S12:

The sync timing counter 9c latches the synchronization timing counter value C2 in response to the synchronization establishment signal SD supplied from the despreading section 7b. At this time, the synchronization timing counter value C2 is m+α at time t15, as shown in Fig. 6H.

### (13) Step S13:

The timing measuring section 9b receives the synchronization establishment signal SD like the sync timing counter 9c.

### (14) Step S14:

The timing measuring section 9b reads the synchronization timing counter value C2 (=m+α) from the sync timing counter 9c in response to the synchronization establishment signal SD from the sync timing counter 9c.

### (15) Step S15:

The timing measuring section 9b reads the transmission timing counter value C1 (=m) from the transmission timing counter 9d in response to the synchronization establishment signal SD from the transmission timing counter 9d.

### (16) Step S16:

The timing measuring section 9b calculates the difference Δ (= (m+α)-m = α) between both of the counter values.

### (17) Step S17:

The timing measuring section 9b outputs a transmission timing value Δ (=α) as the difference Δ to the timing comparing section 9f. The timing comparing section 9f receives the transmission timing value Δ.

### (18) Step S18:

The timing comparing section 9f compares the threshold P set previously with the transmission timing value Δ.

### (19) Step S19:

The timing comparing section 9f outputs the transmission timing value Δ to the transmission control signal generating section 9a in case of transmission timing value Δ ≤ threshold P. The timing comparing section 9f does not output it to the transmission control signal generating section 9a in case of transmission timing value Δ > threshold P.

### (20) Step S20:

The transmission control signal generating section 9a writes the transmission timing value Δ (=difference Δ = α) into the timing memory 9g. The transmission start timing value TM for the next time is an addition of all the transmission timing values Δ written in the timing memory 9g. In this case, it is n+α, and the transmission start timing value TM is used for the timing adjustment for the next time in software hand-over in the same mobile station.

In this way, it is possible to determine the transmission timing without a notice from the host apparatus. As the number of transmission timing values Δ increases, the transmission timing is converged to an optimal value.

According to the present invention, in the software hand-over start, the difference between the downstream transmission start timing and the upstream synchronization establishment timing is detected in hardware and fed back. Thus, the difference between the upstream and downstream transmission timings can be reduced. The communication control apparatus 20 itself can determine the transmission start timing of software hand-over without any notice from the host apparatus.

Also, in the present invention, the transmission start timing can be determined in hardware. Therefore, it is not necessary to carry out the software process such as the transmission start timing notice from the host apparatus, the monitor of a transmission timer, the timing determination through calculation, and the transmission start control. Also, it is possible to reduce a processing load in software.

In the above example, the transmission control signal generating section 9a reads out all the transmission timing values Δ from the timing memory 9g and calculates an addition of them. However, the timing memory 9g may store only one transmission timing value. In this case, the transmission control signal generating section 9a stores the transmission timing value Δ determined by the timing measuring section 9b in the timing memory 9g as a previous time period. Then, the transmission control signal generating section 9a reads out the transmission timing value Δ from the timing memory 9g in response to the transmission start signal ST1, and determines the read out transmission timing value Δ as the transmission start timing value TM (current time period).

Also, the timing memory 9g for the mobile station may be cleared when no access to the timing memory 9g is carried out for a predetermined time. In this case, the timing memory 9g may be allocated to another mobile station.

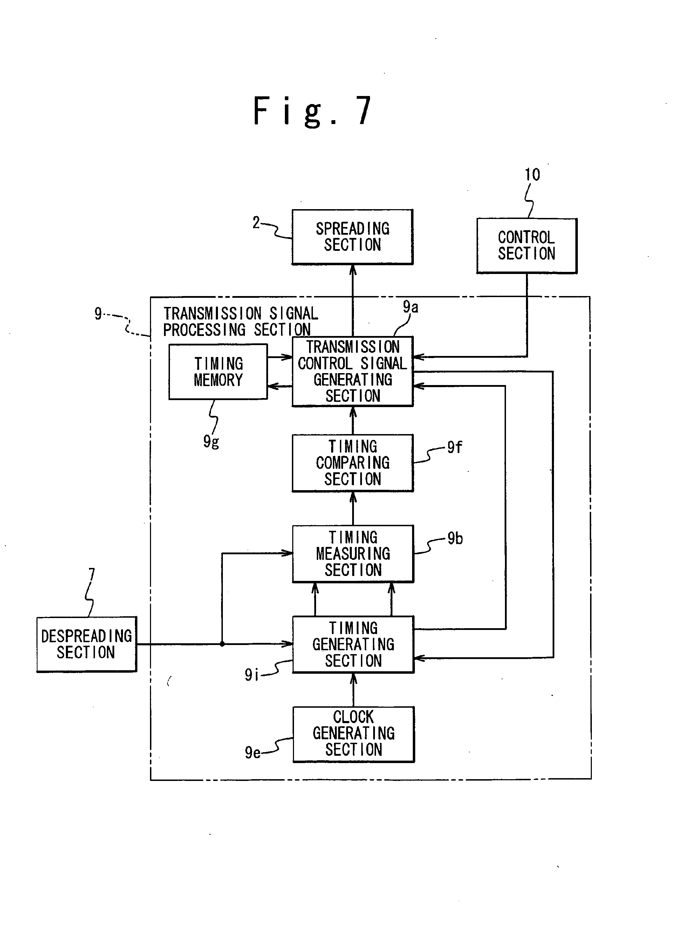

In the above embodiment, the functions of the transmission timing counter 9d and the synchronization timing counter 9c may be incorporated into the timing generating section 9h. This is shown in Fig. 7. Fig. 7 is a diagram showing the transmission signal processing section 9 applied to the communication control apparatus of the CDMA base station system according to the second embodiment of the present invention.

The timing generating section 9i has the functions of the transmission timing counter 9d, the sync timing counter 9c and the timing generating section 9h shown in Fig. 3.

The timing generating section 9i has a counter (not shown) which always counts up the clock signal generated from the clock generating section 9e. Also, the timing generating section 9i sets the transmission start timing value TM supplied from the transmission control signal generating section 9a. When the counter value of the counter and the transmission start timing value TM are coincident with each other, the timing generating section 9i outputs the transmission start signal ST2 to the transmission control signal generating section 9a. Simultaneously with it, the timing generating section 9i notifies the counter value C01 as the transmission timing counter value to the timing measuring section 9b. Also, when the synchronization establishment signal SD is received from the despreading section 7, the timing generating section 9i notifies the counter value C02 as the synchronization timing counter value to the timing measuring section 9b. Because the others are same as the above-mentioned embodiment, the description of them will be omitted.

In Fig. 7, the counter used for the timing measurement is reduced to one circuit, and it is possible to reduce the circuit scale.

According to the present invention, it is possible to determine the transmission start timing without the support of the other apparatus in case of software hand-over (software hand-over) start in the CDMA base station system.

## Claims

1. A communication control apparatus of a CDMA base station system, comprising:
a control section (10) which generates a first transmission start signal (ST1) to instruct start of software hand-over for a mobile station which is communicating; and
a transmission signal processing section (9) which determines a current time period (TM) from at least one previous time period in response to said first transmission start signal, and generates a second transmission start signal (ST2) after the determined current time period from reception of said first transmission start signal, said at least one previous time period being measured in said transmission signal processing section,
wherein a transmission signal is transmitted from said communication control apparatus to said communicating mobile station in response to said second transmission start signal.

2. The communication control apparatus according to claim 1, wherein said transmission signal processing section further comprises a memory area,
said transmission signal processing section determines said current time period from said at least one previous time period stored in said memory area.

3. The communication control apparatus according to claim 2, wherein said transmission signal processing section receives a reply signal to said transmission signal as a synchronization establishment signal (SD) from said communicating mobile station, determines a time period from the generation of said second transmission start signal to the reception of said synchronization establishment signal and stores the determined time period as said previous time period in said memory area.

4. The communication control apparatus according to claim 2 or 3, wherein said memory area is provided for every mobile station.

5. The communication control apparatus according to any of claims 2 to 4, wherein said memory area is cleared if said memory area is not accessed for a predetermined time.

6. The communication control apparatus according to claim 5, wherein said memory area is allocated to another mobile station after said memory area is cleared.

7. The communication control apparatus according to any of claims 1 to 6, wherein said communication control apparatus is provided for a plurality of sectors,
said software hand-over is carried out between first and second sectors of said plurality of sectors, and
said communicating mobile phone is communicating in said first sector.

8. The communication control apparatus according to any of claims 1 to 7, wherein there are a plurality of previous time periods, and
said transmission signal processing section determines said current time period from an addition of all of said plurality of previous time periods.

9. The communication control apparatus according to any of claims 1 to 7, wherein said transmission signal processing section determines said current time period from said previous time period immediately before.

10. The communication control apparatus according to claim 1, wherein said transmission signal processing section comprises:
a memory area (9g) which is provided for said mobile station to store said at least one previous time period (Δ);
a transmission control signal generating section (9a) which reads out said at least one previous time period from the memory area (9g) to determine said current time period; and
a timing generating section (9h) which contains a first counter and outputs said second transmission start signal (ST2) when a counter value (C0) of said first counter and said current time period are coincident with each other, and
said transmission control signal generating section (9a) receives said second transmission start signal from said timing generating section and outputs said second transmission start signal.

11. The communication control apparatus according to claim 1, wherein the transmission signal processing section comprises:
a memory area (9g) which is provided for said mobile station to store said at least one previous time period (Δ) ;
a transmission control signal generating section (9a) which reads out said at least one previous time period from the memory area in response to said first transmission start signal to determine said current time period;
a timing generating section (9h) which contains a first counter and outputs said second transmission start signal when a counter value (C0) of said first counter and said current time period are coincident with each other;
a transmission timing counter (9d) which contains a second counter and latches a second counter value (C1) of said second counter in response to said second transmission start signal;
a synchronization timing counter (9c) which contains a third counter and latches a third counter value (C2) of said third counter in response to a reply signal to said transmission signal as a synchronization establishment signal (SD) from said mobile station; and
a timing measuring section (9e) which reads said second counter value from said transmission timing counter (9d) and reads said third counter value from said synchronization timing counter (9c) in response to said synchronization establishment signal, and calculates a difference (Δ) between said second counter value (C1) and said third counter value (C2) as a time period, and
said transmission control signal generating section (9a) which receives and transfer said second transmission start signal from said timing generating section and stores the calculated time period as said previous time period in said memory area.

12. The communication control apparatus according to claim 1, wherein the transmission signal processing section comprises:
a memory area (9g) which is provided for said mobile station to store said at least one previous time period (Δ) ;
a transmission control signal generating section (9a) which reads out said at least one previous time period from the memory area in response to said first transmission start signal to determine said current time period;
a timing measuring section; and
a timing generating section (9i) which contains a first counter, and outputs said second transmission start signal and the count value of said first counter as a first transmission counter value (C01) to said timing measuring section (9e), when a counter value of said first counter and said current time period are coincident with each other, and outputs the count value of said first counter as a synchronization first counter value (C02) to said timing measuring section (9e) in response to a reply signal to said transmission signal as a synchronization establishment signal (SD) from said mobile station,
said timing measuring section calculates a time period as a difference (Δ) between the first transmission counter value (C01) and the synchronization first counter value (C02) in response to said synchronization establishment signal (SD), and
said transmission control signal generating section receives and transfers said second transmission start signal from said timing generating section, and stores the calculated time period as said previous time period in said memory area.

13. The communication control apparatus according to claim 11 or 12, wherein said transmission signal processing section further comprises:
a timing comparing section (9f) which outputs the calculated time period to said transmission control signal generating section when said calculated time period outputted from said timing measuring section is equal to or less than a reference value (P) set previously.

14. A CDMA base station system, comprising:
said communication control apparatus (20) according to any of claims 1 to 13; and
antennas (5a and 5b) which are connected with said communication control apparatus (20) to communicate with said communicating mobile station,
wherein said communication control apparatus further comprises:
spreading sections (2: 2a and 2b), a selected one of which generates a spread signal obtained by carrying out a spreading process to a transmission base band signal in response to said second transmission start signal, said spread signal being transmitted to said communicating mobile state through one of said antennas corresponding to said selected spreading section; and
despreading sections (7), one of which corresponds to said selected spreading section and carries out synchronization detection of a reception signal from said communicating mobile station and outputs said synchronization establishment signal.

15. A communication control method in a CDMA base station system, comprising:
generating a first transmission start signal (ST1) to instruct software hand-over between a first sector and a second sector different from the first sector in which a mobile station which is communicating;
generating a second transmission start signal with a current time period in response to said first transmission start signal; and
transmitting to said communicating mobile station, a spread signal which is obtained by carrying out a spreading process to a transmission base band signal in response to said second transmission start signal.

16. The communication control method according to claim 15, wherein said generating a second transmission start signal comprises:
reading out at least one transmission time value (Δ) corresponding to said communicating mobile station from a memory area in response to said first transmission start signal;
determining said current time period from the read out at least one transmission time value; and
generating said second transmission start signal when a counter value (C0) of a first counter and the determined current time period are coincident with each other.

17. The communication control method according to claim 16, further comprising:
generating a synchronization establishment signal from a reception signal received from said communicating mobile station;
determining said transmission time value based on said synchronization establishment signal and said first transmission start signal; and
storing the determined transmission time value in said memory area.

18. The communication control method according to claim 17, wherein said determining said transmission time value comprises:
holding a second counter value (C1) of a second counter in response to said second transmission start signal (ST2);
holding a third counter value (C2) of a third counter in response to said synchronization establishment signal; and
calculating said transmission time value from said second counter value and said third counter value.

19. The communication control method according to claim 17 or 18, wherein said storing the determined transmission time value comprises:
determining whether the determined transmission time value is larger than a reference value; and
storing the determined transmission time value in said memory area when the determined transmission time value is equal to or less than said reference value.
